# DEMANDE DE BREVET EUROPEEN

(11) **EP 2 369 752 A1**
(43) Date de publication de la demande: **28.09.2011**
(21) Numéro de dépôt: 10305280.9
(22) Date de dépôt: 22.03.2010
(51) Int. Cl.: H04B 1/16, H04W 52/02, G06K 19/077, H04B 5/02

(54) **Dispositif portable avec batterie autonome et interface de communication radiofréquence**

(71) Demandeur: Gemalto SA, 92190 Meudon (FR)
(72) Inventeur: Thill, Michel, 92197, Meudon Cedex (FR); Gravez, Pierre, 92197, Meudon Cedex (FR); Antoine, Matthieu, 92197, Meudon Cedex (FR)

(57) **Abrégé**

L'invention vise à optimiser l'autonomie d'un équipement portable ayant une interface de communication radiofréquence en coupant l'alimentation de celui-ci lorsqu'il arrive dans un état donné. Un dispositif portable 102 dispose d'une batterie 206, d'un circuit radiofréquence 201 permettant au dispositif portable 102 d'échanger des informations avec un dispositif hôte 101. Le dispositif portable 102 comporte un interrupteur électronique 202 relié entre la batterie 206 et au moins le circuit radiofréquence 201, l'interrupteur permettant d'alimenter ou de ne pas alimenter le circuit radiofréquence. Un circuit de contrôle 203 et de commande d'alimentation est apte à contrôler l'interrupteur électronique 202 de sorte que celui-ci cesse d'alimenter le circuit radio fréquence dès qu'une rupture de communication est détectée.

## Description

L'invention se rapporte à un dispositif portable avec batterie autonome et interface de communication radio fréquence. Plus particulièrement, l'invention se rapporte à des équipements dont la batterie est de petite dimension, tel que par exemple un badge d'accès.

Un dispositif de badge communiquant est pris comme exemple concret de réalisation de l'invention. Néanmoins, tout autre dispositif portable, autonome en énergie et disposant d'une interface de communication radiofréquence sera susceptible d'implémenter l'invention décrite ci-après.

L'état de l'art d'un dispositif de badge communicant permet, entre autre, à un utilisateur de s'authentifier à un système informatique distant tel que par exemple un ordinateur personnel, un téléphone portable, un assistant numérique personnel ou un dispositif avec lequel interagir, dans un périmètre limité.

Ce système d'authentification comporte un dispositif mobile porté par l'utilisateur et est constitué :
- D'une carte à puce contenant, de manière sécurisée, les secrets de l'utilisateur,
- D'un porte badge électronique disposant d'une interface pour carte à puce ISO7816 et d'une interface radiofréquence par exemple de type Bluetooth.

Cet équipement permet de relayer les données entre la carte à puce et le système informatique distant. Dans cet exemple, on admet que le système informatique distant est équipé d'une interface radio fréquence Bluetooth.

L'un des critères clé d'un dispositif portable autonome en énergie présentant une interface radio fréquence est son autonomie. Les interfaces radio fréquences disponibles (WiFi, Bluetooth, ...) mettent en oeuvre des techniques destinées à augmenter l'autonomie de tels dispositifs. Cependant, l'interface radio fréquence n'est pas complètement mise à l'arrêt et consomme donc de l'énergie, quel que soit son état. Or, il existe des états au cours desquels l'interface radio fréquence peut être mise hors fonctionnement et ainsi assurer une meilleure autonomie.

D'autre part, la densité des équipements sans fil dans des environnements de bureau par exemple peuvent être un facteur de baisse d'autonomie. En effet, même lorsqu'un équipement portable n'est pas dans une session de communication active, il interagit avec l'environnement en écoutant afin de détecter une éventuelle requête de communication. Cette action d'écoute consomme également de l'énergie, de manière non négligeable.

L'invention permet d'optimiser l'autonomie d'un équipement portable ayant une interface de communication radiofréquence en coupant l'alimentation de celui-ci lorsqu'il arrive dans un état donné où l'interface de communication radiofréquence n'est plus utilisée (au moment de la perte de connexion typiquement, ou lorsque l'équipement portable n'a pas réussi à initier une connexion dans un temps imparti). L'utilisateur devra alors exécuter une action volontaire pour redémarrer l'interface de communication radiofréquence.

L'invention est un dispositif portable disposant d'une batterie autonome, d'un circuit radiofréquence, le circuit radiofréquence permettant au dispositif portable d'échanger des informations avec un dispositif hôte. Le dispositif portable se distingue par un interrupteur électronique relié entre la batterie et au moins le circuit radiofréquence, l'interrupteur permettant d'alimenter ou de ne pas alimenter le circuit radiofréquence, et également par un circuit de contrôle et de commande d'alimentation apte à contrôler l'interrupteur électronique de sorte que celui-ci cesse d'alimenter le circuit radio fréquence dès qu'une rupture de communication est détectée.

Préférentiellement, l'interrupteur électronique peut relier la batterie à l'intégralité des circuits du dispositif portable à l'exception du circuit de contrôle. Le circuit de contrôle peut comporter un circuit de démarrage qui bascule l'interrupteur pour le faire alimenter le circuit radiofréquence pendant une durée prédéterminée indépendamment du fait qu'une communication soit en cours ou pas. Le circuit radiofréquence peut être conforme à l'un des standards suivant : IEEE802.15.3, IEEE802.15.4, ou IEEE802.11. Le dispositif portable peut être un badge électronique. Le dispositif peut comporter un lecteur de carte à puce et une carte à puce, et dans lequel le circuit radiofréquence transcode les informations reçu par le badge électronique dans un protocole compréhensible par la carte à puce.

Selon un autre aspect, l'invention est un procédé de gestion d'énergie d'un dispositif portable communiquant. Ledit procédé comporte une étape de coupure d'alimentation des circuits du dispositif portable en cas de rupture d'une communication établie par un circuit radiofréquence dudit dispositif portable.

De manière préférée, la coupure d'alimentation peut être limitée au circuit radiofréquence. Le procédé peut comporter une étape de démarrage au cours de laquelle le circuit radiofréquence est alimenté pendant une durée prédéterminée indépendamment de l'établissement d'une communication radiofréquence. La durée prédéterminée peut commencer suite à une action d'un utilisateur du dispositif portable.

L'invention sera mieux comprise à la lecture de la description qui va suivre en se référant aux dessins annexes, parmi lesquels:
la figure 1 présente l'invention dans son environnement,
la figure 2 présente un mode de réalisation de l'invention,
la figure 3 présente le fonctionnement de l'invention, et
la figure 4 présente une variant de réalisation de l'invention.

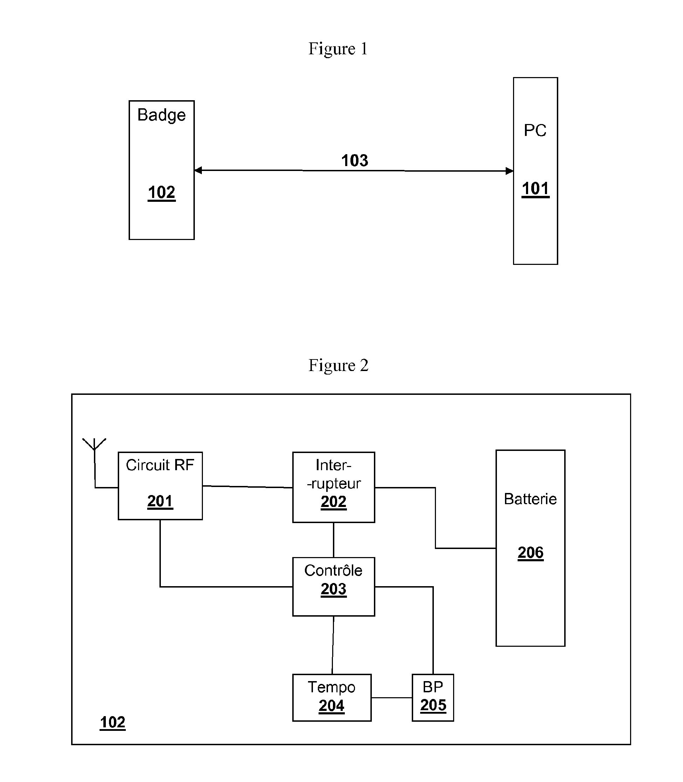

La figure 1 représente un dispositif électronique portable 102 dans son environnement d'utilisation. Le dispositif portable est, par exemple, un badge destiné à communiquer par radiofréquences 103 avec un ordinateur 101. A titre d'exemple, le badge est destiné à une personne souhaitant s'authentifier sur un ordinateur.

Un exemple de réalisation fonctionnelle du badge est explicité sur la figure 2. A titre d'exemple, le badge peut comporter un circuit radiofréquence 201, un interrupteur contrôlé 202, un circuit de contrôle 203, un circuit de temporisation 204, un bouton-poussoir 205 et une batterie 206.

Le circuit radiofréquence 201 comporte une interface de communication dont la portée est comprise entre une dizaine et une centaine de mètres. Le circuit radio fréquence peut comporter également de nombreux autres éléments tel que par exemple un circuit de traitement de données. Il va de soit que le badge peut également comporter d'autre élément non représentés tel que par exemple un lecteur de carte à puce dont l'alimentation est commune ou pas avec le circuit radio fréquence. L'interface radiofréquence est, par exemple, conforme à l'un des standards suivant: Bluetooth (IEEE 802.15.3), Zigbee (IEEE 802.15.4), Wifi (IEEE802.11) ou autres. Le circuit radiofréquence 201 comporte une entrée/sortie qui fournit l'état de connexion de l'interface de communication. Cette entrée sortie peut être présente sur certains circuit de communication ou peut être réalisée de manière logicielle sur une entrée/sortie à usage général de composant (plus connu sous l'accronyme GPIO pour General Purpose Input/Output).

L'interrupteur contrôlé 202 est par exemple un transistor de puissance à faible courant de fuite ou tout autre type d'interrupteur électronique disposant d'une entrée d'activation. Dans le cadre de l'invention, cet interrupteur contrôlé 202 permet de gérer l'alimentation du circuit radiofréquence 201 en fonction de l'information reçue par le circuit de contrôle 203.

Le bouton poussoir 205 permet à l'utilisateur d'initier manuellement la connexion du badge 102 avec le PC 101 en envoyant cette information d'initialisation de connexion au circuit de contrôle 203. Une action sur le bouton poussoir 205 initialise également le circuit de temporisation 204.

Le circuit de temporisation 204 est un circuit permettant d'indiquer qu'une durée prédéfinie s'est écoulée après l'appui sur le bouton poussoir 205, de nombreux circuits monostables à durée calibrée sont à disposition de l'homme du métier. Ce circuit de temporisation 204 possède une sortie dont l'état indique si la durée prédéfinie est atteinte ou pas. Cette information est envoyée au circuit de contrôle 203.

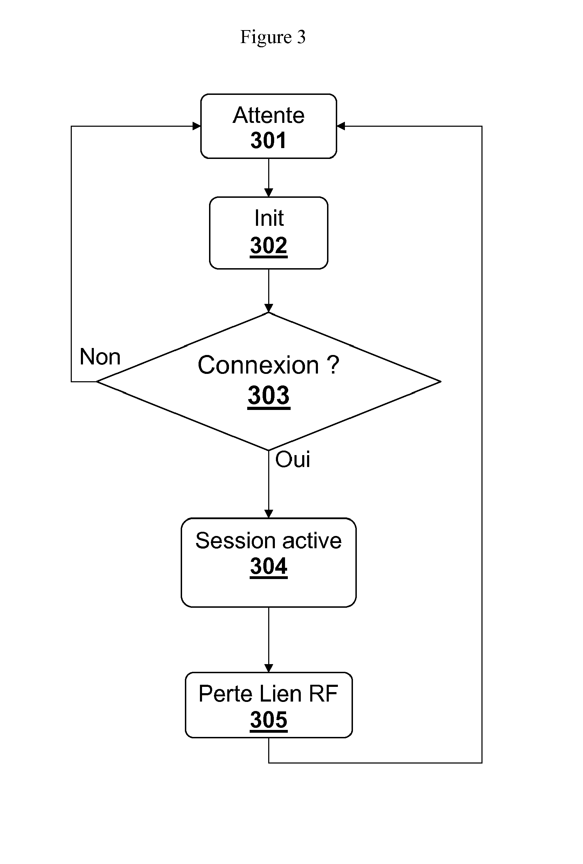

Le circuit de contrôle 203 est un circuit qui a pour rôle d'interpréter les informations reçues par l'interface radio fréquence 201, le circuit de temporisation 204 et le bouton poussoir 205 pour ensuite commander l'interrupteur contrôlé 202. Il est, par exemple, composé de portes logiques qui réalise une machine d'état prenant en compte les informations reçues en entrée pour ensuite contrôler une bascule qui fournira une information à l'interrupteur commandé 202 afin de couper ou non l'alimentation de l'interface de communication 201. Le circuit de contrôle 203 réalise à titre préférentiel l'organigramme de la figure 3.

La batterie 206 est une batterie de faible dimension et donc de faible capacité par exemple de type lithium-ion ou de type lithium-polymère.

La figure 3 présente le fonctionnement de l'invention. La première étape 301 est une étape au cours de laquelle le badge est en mode de veille. Le circuit de contrôle 203 est alimenté et il commande à l'interrupteur commandé 202 de couper l'alimentation du circuit radiofréquence 201.

L'étape 302 est une étape d'initiation de communication entre le badge 102 et un hôte auprès duquel on souhaite s'authentifier, par exemple le PC 101. L'initiation de la communication est effectuée par l'utilisateur lorsque celui-ci actionne le bouton poussoir 205. L'action sur le bouton poussoir lance une temporisation prédéterminée et le circuit de contrôle alimente le circuit radiofréquence 201. Lors cette étape 302, le circuit radiofréquence 201 ouvre un canal d'écoute pour repérer une communication. Cette étape dure jusqu'à la fin d'une durée prédéterminée. La durée prédéterminée correspond à une durée supérieure au temps nécessaire pour détecter un canal ouvert et se connecter sur ce canal. Le circuit de temporisation 204 indique au circuit de contrôle 203 de maintenir l'alimentation du circuit radiofréquence 201 en envoyant l'information adéquate à l'interrupteur commandé 202.

Le test 303 correspond à la fin de la durée prédéterminée. Si aucune communication n'a été établie pendant cette durée, alors l'alimentation du circuit de communication radiofréquence 201 est coupée et l'on retourne à l'étape 301. Si une connexion est établie pendant la durée prédéterminée, alors le circuit de contrôle 203 maintient d'alimentation en envoyant l'information adéquate à l'interrupteur commandé 202.

L'étape 304 correspond au déroulement d'une session active issue de la connexion effectuée à l'étape précédente. Pendant cette étape 304, le badge 102 et l'hôte distant 101 échangent des informations au travers du lien radiofréquence 103.

Si la connexion radiofréquence est rompue alors on passe à l'étape 305. Les causes de cette rupture de connexion peuvent être multiples : distance trop importante entre le badge 102 et l'hôte distant 101, extinction de l'interface de communication radiofréquence de l'hôte distant 101, etc. Cette rupture de connexion est indiquée par le circuit radiofréquence 201 transmet l'information de rupture de connexion au système de contrôle 203. Au cours de cette étape 305, le circuit de contrôle 203 indique à l'interrupteur commandé 202 de couper l'alimentation du circuit radiofréquence 201. Puis, le circuit de contrôle 205 retourne à l'étape d'attente 301.

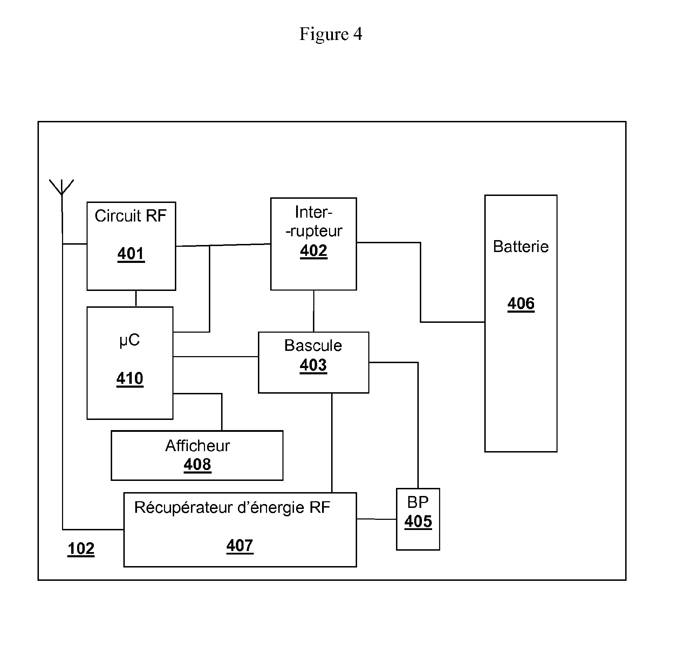

Un second exemple de réalisation fonctionnelle du badge est détaillé sur la figure 4. Le badge est alors matérialisé par une carte à puce de format ISO et incluant à titre d'exemple un afficheur, la carte comportant de préférence:
- Un microcontrôleur 410 correspondant à un circuit conventionnel de carte à puce conforme à la norme IS07816, un tel circuit ayant une très faible consommation en mode veille 410. Ce dernier est connecté avantageusement par ses entrées/sorties à usage général à des périphériques tels que par exemple l'interface de commande d'un afficheur 408, une bascule 403, un bouton poussoir 405 et un interrupteur contrôlé 402 relié à une batterie 406 identique à la batterie 206 sur la figure 2.
- Une interface radiofréquence 401 dont les fonctions et propriétés sont identiques au circuit 201 de la figure 2. Ce circuit peut être intégré ou non sur le même substrat monolithique que le microcontrôleur 410. Dans ce dernier cas les échanges de données avec le circuit 401 sont effectués via des entrées/sorties à usage général des composants.
- Un circuit de récupération d'énergie électrique sur le champ radiofréquence ambiant 407 capté par l'antenne. Ce dernier composé par exemple d'un arrangement redresseur, pompe de charge à diode, régulateur de tension, charge une capacité réservoir de forte valeur. Le circuit connu de l'homme de l'art pour l'alimentation électrique des étiquettes électroniques UHF est capable de délivrer une puissance de quelques dizaines de microwatts sur une durée de l'ordre de 10 secondes lorsque le champ électrique est suffisant.

Dans cet exemple les fonctions de contrôle réalisées par le circuit 203 est assuré en partie par la bascule 403 et par le microcontrôleur 410, le microcontrôleur 410 assurant le fonctionnement décrit avec l'organigramme de la figure 3, la bascule permettant un démarrage à très faible consommation. Egalement, le circuit de temporisation du circuit 204 de la figure 2 est programmé dans le code exécutable et intégrées au microcontrôleur de très faible consommation 410. L'appui de l'utilisateur sur le bouton poussoir 402 permet de faire basculer la bascule 403 dans un état qui permet de rendre passant l'interrupteur contrôlé 402 et d'alimenter les circuits 401 et 410 par la batterie. Les programmes de démarrage des circuits 401 et 410 sont également initialisés, la temporisation est lancée lors du démarrage du microcontrôleur 410 ainsi que la tentative de connexion avec le terminal 101.

L'utilisation d'une bascule 403 permet de n'avoir à alimenter qu'un nombre très réduit de transistors pour initier la conduction de l'interrupteur 402. Ainsi le circuit de récupération d'énergie 407 peut alimenter ces quelques transistors en utilisant la très faible puissance du champ électromagnétique servant à la communication radio. Une telle solution permet en outre de ne pas utiliser la batterie 406 pour alimenter ce cette bascule 403, réduisant ainsi les courants de fuite en mode veille.

## Revendications

1. Dispositif portable (102) disposant d'une batterie autonome (206, 406), d'un circuit radiofréquence (201), le circuit radiofréquence (201) permettant au dispositif portable (102) d'échanger des informations avec un dispositif hôte ( 101), **caractérisé en ce que** le dispositif portable (102) comporte :
- un interrupteur électronique (202, 402) relié entre la batterie (206, 406) et au moins le circuit radiofréquence (201), l'interrupteur permettant d'alimenter ou de ne pas alimenter le circuit radiofréquence,
- un circuit de contrôle (203, 403, 410) et de commande d'alimentation apte à contrôler l'interrupteur électronique (202, 402) de sorte que celui-ci cesse d'alimenter le circuit radio fréquence dès qu'une rupture de communication est détectée.

2. Dispositif selon la revendication 1, dans lequel l'interrupteur électronique (202, 402) relie la batterie (206) à l'intégralité des circuits du dispositif portable (102) à l'exception du circuit de contrôle (203, 403).

3. Dispositif selon la revendication 1, dans lequel le circuit de contrôle (203, 403) comporte un circuit de démarrage (205, 204, 403, 405, 407, 410) qui bascule l'interrupteur (202, 402) pour le faire alimenter le circuit radiofréquence (201, 401) pendant une durée prédéterminée indépendamment du fait qu'une communication soit en cours ou pas.

4. Dispositif selon la revendication 3, dans lequel le circuit radiofréquence (201, 401) établie une communication radiofréquence avec le dispositif hôte (101).

5. Dispositif selon la revendication 1, dans lequel le circuit radiofréquence est conforme à l'un des standards suivant : IEEE802.15.3, IEEE802.15.4, ou IEEE802.11.

6. Dispositif selon la revendication 1, dans lequel le dispositif portable (102) est un badge électronique.

7. Dispositif selon la revendication 6, dans lequel le dispositif comporte (102) un lecteur de carte à puce et une carte à puce, et dans lequel le circuit radiofréquence (201, 401) transcode les informations reçu par le badge électronique dans un protocole compréhensible par la carte à puce.

8. Procédé de gestion d'énergie d'un dispositif portable (102) communiquant, **caractérisé en ce que** ledit procédé comporte une étape (305) de coupure d'alimentation des circuits du dispositif portable en cas de rupture d'une communication établie par un circuit radiofréquence (201, 401) dudit dispositif portable (102).

9. Procédé selon la revendication 8, dans lequel la coupure d'alimentation est limitée au circuit radiofréquence (201, 401).

10. Procédé selon la revendication 8, lequel comporte une étape de démarrage (302) au cours de laquelle le circuit radiofréquence (201, 401) est alimenté pendant une durée prédéterminée indépendamment de l'établissement d'une communication radiofréquence.

11. Procédé selon la revendication, 10 dans lequel la durée prédéterminée commence suite à une action d'un utilisateur du dispositif portable.
